# EUROPÄISCHE PATENTANMELDUNG

(11) **EP 1 871 002 A2**
(43) Veröffentlichungstag der Anmeldung: **26.12.2007**
(21) Anmeldenummer: 07106895.1
(22) Anmeldetag: 25.04.2007
(51) Int. Cl.: H02P 7/00

(54) **Verstellantrieb zum Verstellen mindestens eines beweglichen Teils in einem Kraftfahrzeug**

(30) Priorität: 22.06.2006 DE 102006028634
(71) Anmelder: ROBERT BOSCH GMBH, 70442 Stuttgart (DE)
(72) Erfinder: Kriener, Kilian, 70372 Stuttgart (DE); Harnisch-Scheuermann, Juergen, 71272 Renningen (DE); Weible, Reinhold, 70437 Stuttgart (DE); Klein, Juergen, 67663 Kaiserslautern (DE); Flammuth, Sven, 70499 Stuttgart (DE)

(57) **Zusammenfassung**

Vorgeschlagen wird Verstellantrieb (10) zum Verstellen eines beweglichen Teils (12) in einem Kraftfahrzeug. Der erfindungsgemäße Verstellantrieb (10) umfasst mindestens ein Abtriebselement (42) zur Verstellung des beweglichen Teils (12), einen Gleichstrommotor (26) zum Antreiben des Abtriebelements (40) über eine Motorwelle (32), eine Steuerelektronik (28) zur Ansteuerung des Gleichstrommotors (26), einen mit der Steuerelektronik (28) elektrisch verbundenen Drehwinkelsensor (36) zur Erfassung von Drehwinkeln der Motorwelle (32), eine Datenschnittstelle (22) zum Empfangen zumindest eines Drehwinkelsollwertes, einer Solldrehgeschwindigkeit und/oder einer gewünschten Drehrichtung sowie zum Senden eines Antriebzustands, einen Energieversorgungsanschluss (18, 20) zur Versorgung des Verstellantriebes (10) mit Energie und ein den Verstellantrieb (10) umgebendes Gehäuse (44).

## Beschreibung

Die Erfindung betrifft einen Verstellantrieb zum Verstellen mindestens eines beweglichen Teils in einem Kraftfahrzeug sowie einen den Verstellantrieb aufweisenden Luftklappensteller.

### Stand der Technik

In Kraftfahrzeugen werden Verstellantriebe, bestehend aus einem Gleichstrommotor und einem Untersetzungsgetriebe, zur Verstellung beweglicher Teile, beispielsweise von Sitzen, Schiebedächern, Fenstern oder Luftverteilerklappen einer Klimaanlage, eingesetzt. Die Steuerung bzw. Regelung der Position und der Verstellgeschwindigkeit des beweglichen Teils werden mittels verschiedener elektronischer Schaltungen und Schaltkreise zur Leistungsbereitsstellung und zur Positionserfassung bewerkstelligt.

Aus der KR 2001087813 A ist ein Luftklappensteller bekannt, bei dem ein Microcomputer und eine Steuerelektronik in einer gemeinsamen Kontrollvorrichtung integriert sind, um die Anzahl der benötigten Kabelverbindungen zwischen dem Luftklappensteller und der Kontrollvorrichtung sowie den Herstellungsaufwand und die Kosten zu reduzieren. Die Kontrollvorrichtung umfasst eine Datenschnittstelle zur Übertragung der Rotationsgeschwindigkeit eines in dem Luftklappensteller integrierten Elektromotors und eines von dem Microcomputer erzeugten Ansteuersignals für eine Leistungselektronik zur Ansteuerung des Elektromotors. Weiterhin ist in der Kontrollvorrichtung eine Positionskorrekturschaltung zur Steuerung oder Regelung der Position vorgesehen, um Fehler, die durch ein Überdrehen des Elektromotors oder durch eine Verstellung des Lufklappenstellers hervorgerufen werden, zu korrigieren. Ebenso weist die Kontrollvorrichtung eine Schutzschaltung auf, die eine Zerstörung des Luftklappenstellers durch Übertemperaturen infolge zu hoher Ströme, einer Überlastung oder eines Kurzschlusses zwischen dem Lufklappensteller und der Kontrollvorrichtung vermeiden soll. Schließlich enthält die Kontrollvorrichtung die bereits erwähnte Leistungselektronik zur Ansteuerung des Elektromotors und eine Unterbrecherschaltung, die mit der Positionskorrekturschaltung zusammenarbeitet. Die Kontrollvorrichtung und der Luftklappensteller sind über eine Zweidrahtleitung mit einer Länge von ein bis fünf Metern miteinander verbunden.

### Offenbarung der Erfindung

Der erfindungsgemäße Verstellantrieb zum Verstellen eines beweglichen Teils in einem Kraftfahrzeug umfasst mindestens ein Abtriebselement zur Verstellung des beweglichen Teils, einen Gleichstrommotor, insbesondere einen Gleichstromkollektormotor, zum Antreiben des Abtriebelements über eine Motorwelle, eine Steuerelektronik zur Ansteuerung des Gleichstrommotors, einen mit der Steuerelektronik elektrisch verbundenen Drehwinkelsensor zur Erfassung von Drehwinkeln der Motorwelle, eine Datenschnittstelle zum Empfangen zumindest eines Drehwinkelsollwertes, einer Solldrehgeschwindigkeit und/oder einer gewünschten Drehrichtung sowie zum Senden eines Antriebzustands, einen Energieversorgungsanschluss zur Versorgung des Verstellantriebes mit Energie und ein den Verstellantrieb umgebendes Gehäuse. Durch die Integretation sämtlicher mechanischer und elektronischer Komponenten des Verstellantriebs in einem gemeinsamen Gehäuse ergibt sich der Vorteil eines deutlich reduzierten Systempreises in Verbindung mit der Einsparung von Bauraum und Gewicht. Darüber hinaus gestattet der erfindungsgemäße Verstellantrieb die bestmögliche Ausnutzung der Komponenten, indem beispielsweise Störungen, die durch eine lange Kabelverbindung zwischen dem elektromechanischen Antriebsteil und der Steuerelektronik entstehen können, wirksam vermieden werden und demzufolge gegenüber dem Stand der Technik ein Betrieb mit gesteigerter Zuverlässigkeit möglich ist.

Weitere Vorteile der Erfindung ergeben sich durch die in den abhängigen Ansprüchen angegebenen Merkmale sowie aus der Zeichnung und der nachfolgenden Beschreibung.

So ist vorgesehen, dass die Steuerelektronik den Gleichstrommotor über eine Leistungselektronik mit einem pulsweitenmodulierten Signal ansteuert, wobei die Frequenz des pulsweitenmodulierten Signals ca. 20 kHz beträgt, um ein hörbares Takten zu vermeiden. Wird beispielsweise bei einem Ausfahren einer Lufterverteilerklappe aus dem Anschlag heraus bei tiefen Umgebungstemperaturen ein gegenüber dem normalen Betrieb erhöhter Drehmomentbedarf erforderlich, steuert die Steuerelektronik die Leistungselektronik in vorteilhafter Weise zusätzlich tieffrequent mit einer Frequenz zwischen ca. 5 Hz und ca. 25 Hz an. In vorteilhafter Weise umfasst die Leistungselektronik eine Vollbrückenschaltung zur Ansteuerung des Gleichstrommotors, wobei auch im Falle eines 12-Volt-Bordnetzes der Gleichstrommotor als ein 6-Volt-Gleichstrommotor ausgebildet ist, um trotz einer schwankenden Versorgungsspannung immer das Nenndrehmoment zur Verfügung zu haben und bei Bedarf den Gleichstrommotor mit höherem Drehmoment betreiben zu können.

Da in der Regel bei einer höheren Umgebungstemperatur ein geringerer, maximaler Motorstrom des Gleichstrommotors erforderlich ist, passt die Steuerelektronik diesen an die Umgebungsbedingungen an. Weiterhin ist vorgesehen, dass die Steuerelektronik bei einer Blockierung des Verstellantriebs und/oder des beweglichen Teils ein Zurückdrehen des Gleichstrommotors bewirkt, um anschließend das Hindernis bzw. die Ursache für die Blockierung mit maximaler Motorspannung zu überwinden.

Um ein eventuelles Spiel des Verstellantriebs auszugleichen ist in einer vorteilhaften Ausgestaltung vorgesehen, dass die Steuerelektronik ein Anfahren der Zielposition des beweglichen Teils stets aus der gleichen Richtung bewirkt. Weiterhin weist die Steuerelektronik eine Logik zum Erkennen einer nicht beabsichtigten Positionsveränderung des beweglichen Teils auf. Sobald die Steuerelektronik eine derartige nicht beabsichtigte Positionsveränderung erkennt, führt sie einen Kalibrierlauf des Gleichstrommotors durch und gewährleistet somit einen sicheren und zuverlässigen Betrieb des Verstellantriebs. Ebenso ist vorgesehen, dass die Steuerelektronik die Drehzahl des Gleichstrommotors in Abhängigkeit vom Abstand zu der jeweiligen Zielposition des beweglichen Teils steuert bzw. regelt.

In besonders einfacher und kostengünstiger Weise lässt sich eine Drehwinkelrückmeldung des Elektromotors mittels eines Drehwinkelsensors realisieren, der als ein ortsfester Hallsensor ausgebildet ist, wobei die Drehwinkel mittels eines auf der Motorwelle drehfest angeordneten, segmentierten Magnetrings berührungslos erfasst werden.

Die Steuerelektronik des Verstellantriebs ist auf einer Leiterplatte angeordnet und besteht zumindest aus einem ASIC, einem Filter gegen elektromagnetische Störungen, einem Energie-Puffer, einer Schutzvorrichtung gegen elektrostatische Entladung und dem Drehwinkelsensor. Dabei weist das Filter gegen elektromagnetische Störungen zumindest einen Längswiderstand und einen Kondensator auf, während der ASIC zumindest die Datenschnittstelle, die Leistungselektronik, einen Spannungsregler, einen Speicher, einen A/D-Umsetzer, einen Microcontroller und eine den Microcontroller überwachende Überwachungseinrichtung umfasst.

Um eine einfache und schnelle Anbindung des Verstellantriebs an ein Bus-System des Kraftfahrzeugs zu gewährleisten, besitzt die Leiterplatte zudem elektrische Kontakte für die Datenschnittstelle und den Energieversorgungsanschluss. Ein besonders vorteilhaftes Bus-System stellt in diesem Zusammenhang der bekannte LIN-Bus dar, so dass die Datenschnittstelle als LIN-Bus-Interface ausgebildet ist. Weiterhin ist vorgesehen, dass zur einfachen und schnellen Anbindung des Verstellantriebs an den LIN-Bus, beispielsweise bei einem notwendigen Austausch oder einer Neuanbindung, die Datenschnittstelle eine automatische Adressierung des Verstellantriebs durchführt.

In einer alternativen Ausgestaltung weist das Gehäuse des Verstellantriebs eine Ausnehmung für eine drehbare, mit dem Abtriebselement in einer Wirkverbindung stehenden Aufnahme auf, die eine durchgehende Öffnung mit an ihrem Öffnungsumfang ausgebildeten Ausformungen enthält zur Übertragung des durch das Abtriebselement erzeugten Drehmoments. Auf diese Weise ist es möglich, den Verstellantrieb auf eine entsprechend ausgebildete Antriebsachse des beweglichen Teils aufzustecken und in seiner Lage den erforderlichen, räumlichen Gegebenheiten anzupassen. Darüber hinaus gewährt die durchgehende Öffnung ein höheres Angriffsmoment auf die Antriebsachse, und es wird wirkungsvoll ein Verkanten des Verstellantriebs gegenüber der Antriebsachse vermieden. Dabei ist es besonders vorteilhaft, wenn ein äußerer Umfang der Aufnahme durch die Ausnehmung geführt ist. Auf diese Weise können aufwändige und teure Lagerkonstruktionen vermieden werden.

Eine besonders einfache Herstellung des Gehäuses ergibt sich, wenn dieses aus Kunststoff gefertigt wird. Darüber hinaus ergibt sich hieraus der Vorteil, dass auf eine zusätzliche Isolierung, wie sie bei einem Metallgehäuse erforderlich wäre, verzichtet werden kann. Weiterhin bietet ein Kunststoffgehäuse gegenüber Metallgehäusen einen deutlichen Gewichtsvorteil. Das Kunststoffgehäuse besteht aus einer Unterschale und aus einer Oberschale bzw. einem Deckel, wobei die Oberschale bzw. der Deckel und die Unterschale miteinander verrastet, verschraubt, verklebt oder verschweißt sind. Die Unterschale ist derart ausgebildet, dass sie Aufnahmen für das Abtriebselement, den Gleichstrommotor und die Leiterplatte aufweist, wobei ein Gehäuseteil der Unterschale als Stecker oder Buchse mit den elektrischen Kontakten der Leiterplatte ausgebildet ist. Um die Laufruhe des Antriebs zu verbessern, ist das Kunststoffgehäuse in vorteilhafter Weise derart ausgestaltet, dass unter Berücksichtigung der Materialeigenschaften die Elastizitäts- und Dämpfungseigenschaften der Gehäuseteile sowie deren Befestigungspunkte, die Körperschallübertragungen und die Körperschallabstrahlungen minimal sind.

Da der Gleichstrommotor in der Regel mit einer deutlich höheren Drehzahl arbeitet als sie für das bewegliche Teil erforderlich bzw. zulässig wäre, ist das Abtriebselement als ein mechanisches Getriebe, insbesondere ein Untersetzungsgetriebe, ausgebildet. Ein derartiges Getriebe ist beispielsweise dann erforderlich, wenn das bewegliche Teil eine Luftverteilerklappe ist, wie sie in Kraftfahrzeug-Klimaanlagen zum Einsatz kommt, so dass der Verstellantrieb in diesem Fall als Bestandteil eines Luftklappenstellers arbeitet. Das Untersetzungsgetriebe besteht in der Regel aus einem oder mehreren Zahnrädern. Um eventuell eingesetzte Schmierstoffe im Bereich der Zahnradeingriffe zu halten, weist das Kunststoffgehäuse in vorteilhafter Weise Wandungen auf, die sich in axialer Richtung der Zahnräder erstrecken und diese in einem definierten, radialen Abstand über einen größtmöglichen Winkelbereich umgeben.

In einer weiteren Ausführungsform weist das Abtriebselement ein Metall-Schneckenrad auf und steht mit einer auf der Motorachse drehfest montierten Schnecke in einer Wirkverbindung. In besonders vorteilhafter Weise besteht die Schnecke aus einem kunststoffgebundenen Magnetmaterial. Somit bewirkt die resultierende magnetische Kraft zwischen der Schnecke und dem Metall-Schneckenrad eine Selbstjustierung, wodurch eine kostenintensive und aufwändige Lagerung der Motorachse in der Unterschale vermieden werden kann. Weiterhin ist es von Vorteil, wenn die aus dem kunststoffgebundenen Magnetmaterial bestehende Schnecke zumindest über einen definierten achsialen Bereich derart magnetisiert ist, dass sie als segmentierter Magnetgeber für den Drehwinkelsensor dient.

### Zeichnung

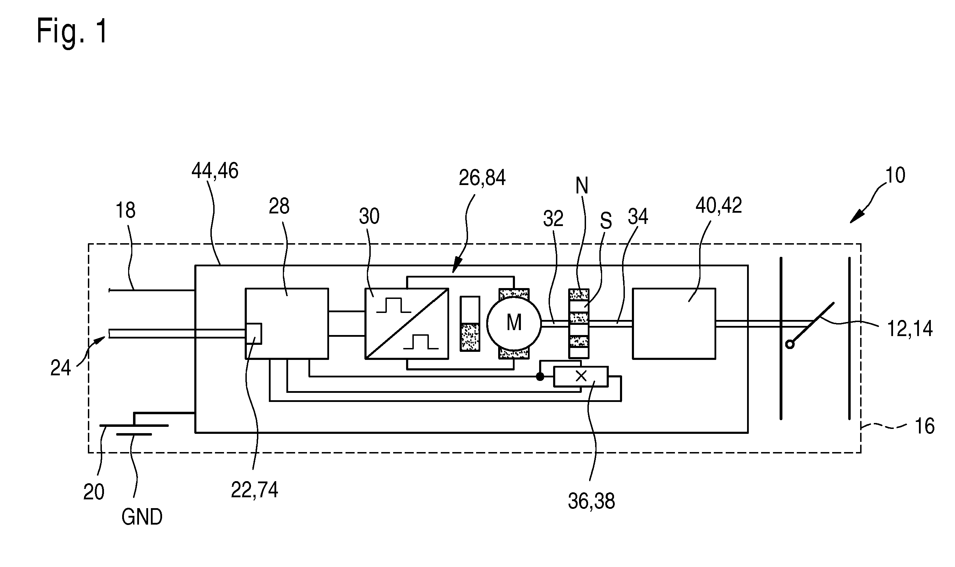

Die Erfindung wird im Folgenden anhand der Figuren 1 bis 4 beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere wird ein Fachmann auch die Merkmale aus unterschiedlichen Ausführungsbeispielen zu weiteren sinnvollen Kombinationen zusammenfassen.

Es zeigen
Fig. 1: ein Blockschaltbild des erfindungsgemäßen Verstellantriebs,
Fig. 2: ein Blockschaltbild der in dem Verstellantrieb eingesetzten Elektronik zur Ansteuerung eines Gleichstrommotors,
Fig. 3: ein erstes Ausführungsbeispiel eines Gehäuses des Verstellantriebs in einem zusammengesetzten Zustand,
Fig. 4a: ein weiteres Ausführungsbeispiel des Gehäuses des Verstellantriebs in einer Schrägdarstellung mit abgehobener Oberschale bzw. abgehobenem Deckel und
Fig. 4b: eine schematische Darstellung einer mit der Elektronik des Verstellantriebs bestückten Leiterplatte.

Figur 1 zeigt ein Blockschaltbild des erfindungsgemäßen Verstellantriebs 10 zum Verstellen eines beweglichen Teils 12 in einem Kraftfahrzeug. Im Folgenden wird bei dem beweglichen Teil 12 stets von einer Luftverteilerklappe 14 einer Kraftfahrzeug-Klimaanlage 16 ausgegangen. Es können aber auch andere bewegliche Teile 12 des Kraftfahrzeugs, beispielsweise Sitze, Schiebedächer, Fenster oder dergleichen, mit dem Verstellantrieb 10 bewegt werden.

Der Verstellantrieb 10 wird über einen Energieversorgungsanschluss 18, 20 mit Energie versorgt, wobei ein Versorgungskontakt 18 mit einer Versorgungsspannung einer nicht gezeigten Energiequelle, beispielsweise einer Kraftfahrzeug-Batterie, und ein Massekontakt 20 mit Masse GND verbunden ist. Weiterhin weist der Verstellantrieb eine Datenschnittstelle 22 auf, die vorzugsweise als serielle Schnittstelle eines LIN-Bus-Systems 24 ausgebildet ist. Mittels der Datenschnittstelle 22 kann zumindest ein Drehwinkelsollwert, eine Solldrehgeschwindigkeit und/oder eine gewünschte Drehrichtung zur Regelung oder Steuerung eines Gleichstrommotors 26, insbesondere eines Gleichstromkollektormotors, von einem nicht gezeigten, übergeordneten Steuergerät (Master) empfangen werden. Ebenso eignet sich die Datenschnittstelle 22 zum Senden eines Antriebzustands des Verstellantriebs 10 an den Master.

Die Datenschnittstelle 22 ist Bestandteil einer Steuerelektronik 28, die zur Regelung oder Steuerung des Gleichstrommotors 26 über eine Leistungselektronik 30 mittels einer Pulsweitenmodulation (PWM) mit einer Frequenz von beispielsweise ca. 20 kHz dient. Wird bei einem Ausfahren der Luftverteilerklappe 14 aus dem Anschlag heraus bei tiefen Umgebungstemperaturen ein erhöhtes Drehmoment benötigt, so kann der Gleichstrommotor 26 zusätzlich tieffrequent mit einer Frequenz von 5 bis 25 Hz angesteuert werden, d.h. diese tieffrequente Modulation wird der eigentlichen PWM überlagert, um eine bessere Überwindung der Haftreibmomente zu ermöglichen.

Mit dem Gleichstrommotor drehfest auf einer Motorwelle 32 verbunden ist ein segmentierter Magnetring 34, dessen Segmente aus Magneten abwechselnder Polarität (N, S) bestehen. Dieser Magnetring 34 wirkt auf einen ortsfest montierten Drehwinkelsensor 36, zum Beispiel einen Hall-Sensor 38 oder dergleichen, der mit der Steuerelektronik 28 elektrisch verbunden ist und zur berührungslosen Erfassung von Drehwinkeln der Motorwelle 32 dient.

Um die Luftverteilerklappe 14 mit einem ausreichenden Moment und der erforderlichen Geschwindigkeit bewegen zu können, ist die Motorwelle 32 des Gleichstrommotors 26 mit einem Abtriebselement 40 verbunden, das als mechanisches Untersetzungsgetriebe 42 ausgebildet ist.

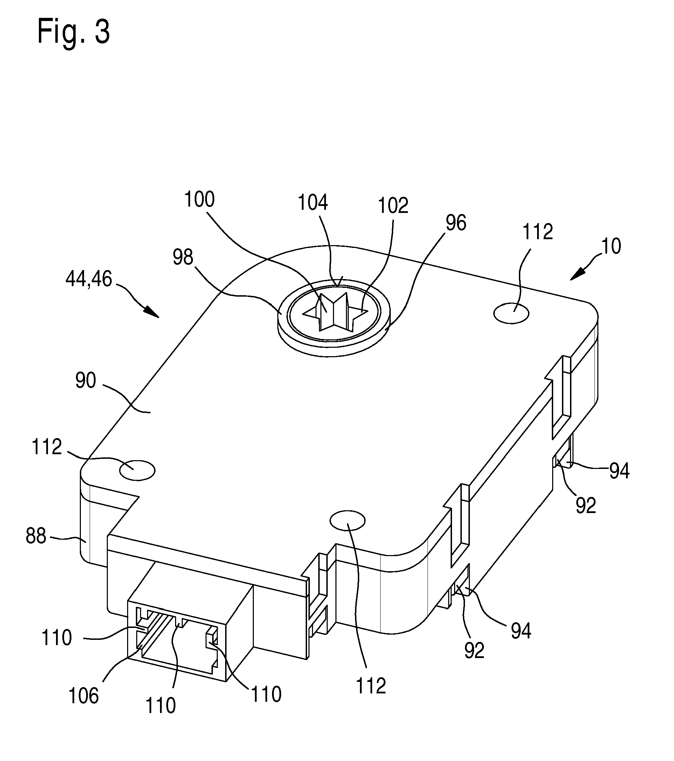

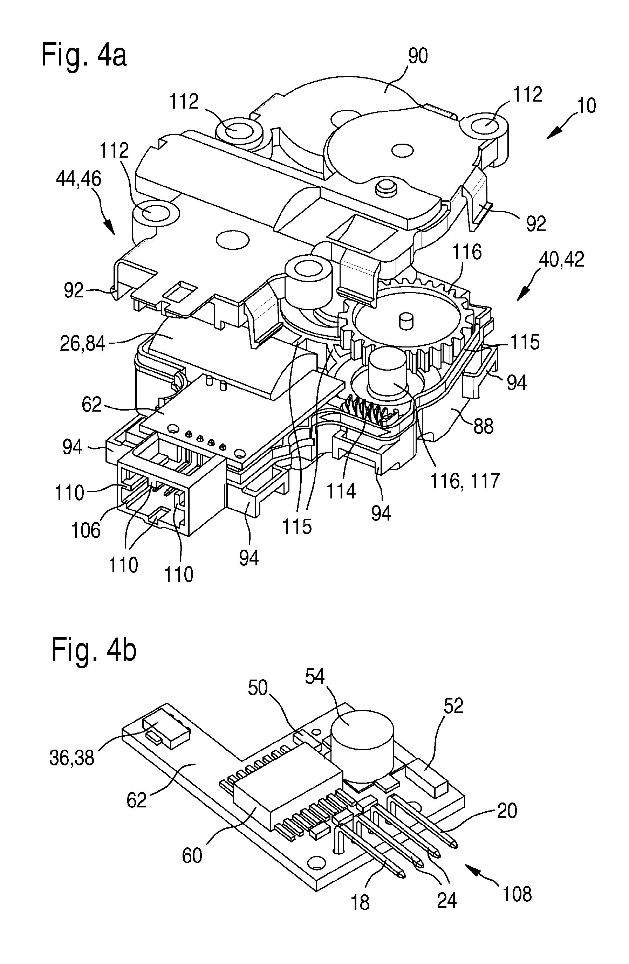

Schließlich ist der Verstellantrieb 10 von einem Gehäuse 44 umgeben, das in vorteilhafter Weise als Kunststoffgehäuse 46 ausgebildet ist. Auf die Ausgestaltung des Gehäuses 44, 46 wird ausführlich im Zusammenhang mit den Figuren 3 und 4 eingegangen.

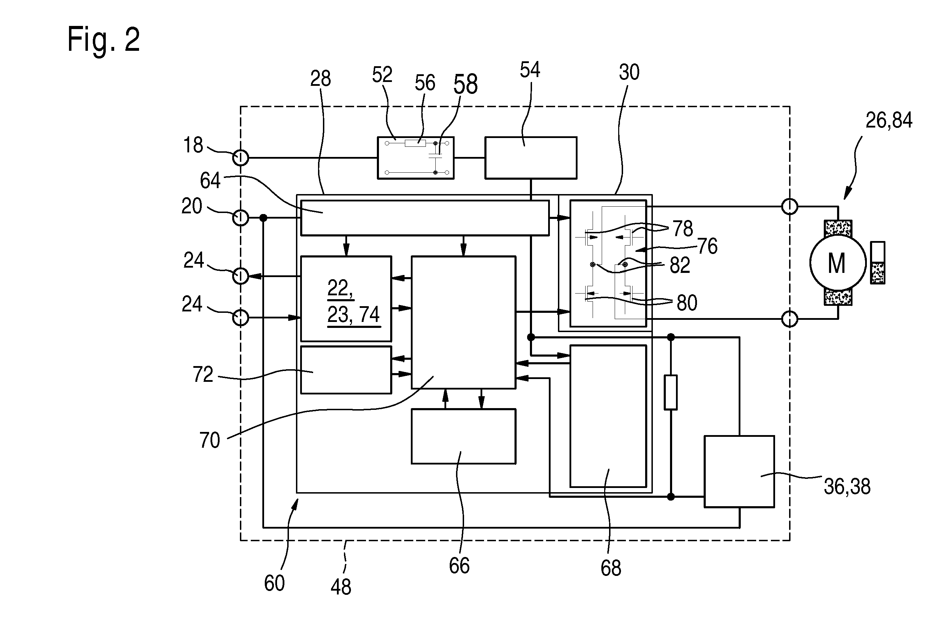

Figur 2 gibt einen Überblick über die in dem Verstellantrieb 10 eingesetzte Elektronik 48 zur Ansteuerung des Gleichstrommotors 26. Diese besteht im Wesentlichen aus der bereits erwähnten Steuerelektronik 28, der Leistungselektronik 30, dem Drehwinkelsensor 36, einer Schutzvorrichtung gegen elektrostatische Entladungen (ESD-Schutz) 50, einem mit der an dem Versorgungskontakt 18 anliegenden Versorgungspannung verbundenen Filter gegen elektromagnetische Störungen (EMC-Filter) 52 und einem Energiepuffer 54.

Das EMC-Filter ist als Filter 1. Ordnung ausgebildet und aus einem Längswiderstand 56 sowie einem Kondensator 58 aufgebaut, wobei auch Filter höherer Ordnungen zum Einsatz kommen können. In vorteilhafter Weise kann der Kondensator 58 des EMC-Filters zusätzlich als Energiepuffer 54 dienen, um Einbrüche der Versorgungsspannung für kurze Zeitspannen zu überbrücken.

Die Steuerelektronik 28 und die Leistungselektronik 30 sind in einem ASIC 60 integriert und zusammen mit dem Drehwinkelsensor 36, dem ESD-Schutz 50, dem EMC-Filter 52 und dem Energiepuffer 54 auf einer Leiterplatte 62 (siehe Figur 4b) angeordnet. Dabei umfasst die in den ASIC 60 integrierte Steuerelektronik 28 folgende Funktionsblöcke:
- die Datenschnittstelle 22,
- einen Spannungsregler 64,
- einen als EEPROM oder OTP augebildeten Speicher 66 zum Abspeichern der Daten des Gleichstrommotors 26,
- einen A/D-Umsetzer 68 zum Einlesen externer Signale und zur Messung der Versorgungsspannung,
- einen Microcontroller 70 inklusive ROM sowie
- eine den Microcontroller 70 überwachende Überwachungseinrichtung (Watchdog) 72.

Der Spannungsregler 64 generiert aus der an dem Versorgungskontakt 18 anliegenden Versorgungsspannung des Kraftfahrzeugs (in der Regel ca. 12 bis 14 V) eine ASIC-interne Spannung von 3,3 V. Diese dient der Versorgung des ASICs 60 und als Referenzspannung für den A/D-Umsetzer 68. Weiterhin kann die ASIC-interne Spannung auch für eine nicht gezeigte Übertemperatur-Erkennungslogik des ASICs 60 herangezogen werden, die im Falle einer Übertemperaturwarnung ein Abschalten des Verstellantriebs 10 bewirkt.

Die Datenschnittstelle 22 ist - wie bereits weiter oben erwähnt - als serielle Schnittstelle eines LIN-Bus-Systems 24 ausgeführt. Sie arbeitet daher als ein so genanntes LIN-Bus-Interface 74, in dem die physikalische Schicht (LIN-Hardware) implementiert ist. Das LIN-Bus-Interface 74 besteht aus einem LIN-Transceiver und einem Zustandsautomat (Finite-State-Machine). Letzterer erkennt die Baudrate, detektiert Nachrichtenanfang und -ende und schreibt das jeweils vom Master empfangene Byte in spezielle Speicherstrukturen (Special Function Register) des Microcontrollers 70, der mit Hilfe von Interrupts über das eingegangene Byte informiert wird. Beim Senden von Nachrichten liest der Zustandsautomat die Werte aus dem Special Function Register des Microcontrollers 70 aus und fügt bei Nachrichtenende ein Stopbit ein.

Um den Verstellantrieb 10 auf möglichst einfache und schnelle Weise an das LIN-Bus-System 24 anzukoppeln, führt die Datenschnittstelle 22 eine automatische Adressierung durch, die in der Regel vom Master initiiert wird. An der automatischen Adressierung nehmen zusammen mit dem Verstellantrieb 10 auch alle weiteren, am LIN-Bus 24 angeschlossenen Aktuatoren des Kraftfahrzeugs teil. Dabei wird jeweils der letzte sich in der Reihe befindende Aktuator mit Hilfe eines zwischen seinem als LIN-Sender arbeitenden LIN-Transceivers und einem als LIN-Empfänger arbeitenden LIN-Transceiver eines vorangeschalteten Aktuators liegendem 1-Ohm-Längswiderstands erkannt, an dem ein Spannungsabfall gemessen wird. Unterschreitet der Spannungsabfall einen bestimmten Schwellenwert, so ist der entsprechende Aktuator der Letzte in der Reihe. Dieser übernimmt die vom Master übertragene Adresse und beendet seine Adressierungssequenz. Die Adressierung wird solange fortgesetzt, bis alle Aktuatoren eine gültige Adresse aufweisen. Ist auf diese Weise der Verstellantrieb 10 in das LIN-Bus-System 24 eingebunden, so werden die Adresse sowie weitere für den Verstellantrieb 10 relevante Daten, wie beispielsweise die Drehrichtung des Gleichstrommotors 26, im Speicher 66 gespeichert, wobei dessen Programmierung vom Microprozessor 70 sichergestellt wird.

Neben der Steuerelektronik 28 enthält der ASIC 60 auch noch die Leistungselektronik 30. Diese ist in der Regel als eine so genannte H-Brücke 76 ausgebildet, die aus zwei High-Side-PMOS-Transistoren 78 und zwei Low-Side-NMOS-Transistoren 80 besteht, zwischen denen jeweils ein Abgriff 82 für den Gleichstrommotor 26 vorgesehen ist. Zur Modulation der Motorspannung werden die Low-Side-NMOS-Transistoren 80 mittels PWM getaktet. Als Freilauf wird zur Verringerung von thermischen Verlusten das so genannte Synchronous-Rectification-Verfahren (Freilauf über die leitend geschalteten High-Side-PMOS-Transistoren 78) verwendet. Die H-Brücke 76 ist durch eine Überstrom- bzw. Kurzschluss-Erkennung geschützt und schaltet im Überlastfall automatisch ab. Bei einer Unterschreitung der für den Betrieb des Gleichstrommotors 26 erforderlichen Versorgungsspannung erfolgt ebenfalls eine Deaktivierung der H-Brücke 76. Dies verhindert bzw. verlangsamt einen weiteren Abfall der Versorgungsspannung und kann somit ein ungewolltes Zurücksetzen des Microcontrollers 70 vermeiden.

Mit Hilfe des A/D-Umsetzers 68, dem eine SAR-Struktur (Successive Approximation Register, d.h. Bits werden in absteigender Reihenfolge nacheinander bestimmt) zu Grunde liegt, können wahlweise bis zu zwei externe A/D-Kanäle und die Versorgungsspannung gemessen werden. Die jeweilige Auswahl erfolgt softwaregesteuert mit einem chipinternen Multiplexer. Die Erfassung der Versorgungsspannung ist für die vom Bordnetz unabhängige Ansteuerung des Gleichstrommotors 26 erforderlich. Mit Hilfe der externen A/D-Kanäle kann beispielsweise ein Temperatursensor in der Klimaanlage 16 des Kraftfahrzeugs oder als alternative Lageerkennung des beweglichen Teils 12 ein nicht gezeigtes Potentiometer eingelesen werden.

Der Microcontroller 70 arbeitet die nachfolgend beschriebene Software ab und übernimmt damit die Steuerung des ASICs 60:
- LIN-Datenverarbeitung,
- Detektion von Fehlern,
- Autoadressierung,
- Endanschlagserkennung,
- Speicherverwaltung,
- Geschwindigkeits-, Temperatur- und Positionsregelung.

Die Software ist in dem ROM des Microcontrollers 70 abgelegt, wobei durch die Überwachungseinrichtung 72 sichergestellt ist, dass der Microcontroller 70, sollte er sich in einem nicht definierten Zustand befinden, zurückgesetzt wird. In der Software sind die logische Schicht und die Applikationsschicht des LIN-Protokolls abgebildet. Entsprechend werden die mittels des LIN-Transceivers 74 empfangenen Datenbytes interpretiert. Bei Kommando-Nachrichten werden die geforderten Aktionen soweit wie möglich durchgeführt. Nach einer Anfrage-Nachricht erfolgt die Generierung einer entsprechenden Antwort-Nachricht inklusive einer Checksumme zur Gewährleistung einer Fehlererkennung und/oder -korrektur.

Die Fehlerdetektion umfasst folgende Fehlerarten: Kurzschluss/Überstrom in der H-Brücke 76, Übertemperatur, Über- und Unterschreiten der Versorgungsspannung, LIN-Timeout und Blockade des Gleichstrommotors 26 bzw. des beweglichen Teils 12, wenn trotz Bestromung des Gleichstrommotors 26 keine Rotation über einen definierten Zeitraum detektiert wird (Endanschlagerkennung). Im Falle einer funktionierenden LIN-Kommunikation wird der Master bei entsprechender Anfrage über den Status des Verstellantriebs 10 informiert. Treten dagegen Probleme während der LIN-Bus-Kommunikation auf, läuft der Verstellantrieb 10 an seine vom Master definierte Notlaufposition. Beispielsweise wird die Luftverteilerklappe 14, wenn sie als Frischluft-Umluft-Steller arbeitet, auf Frischluftzufuhr gestellt. Werden eine Übertemperatur im ASIC 60, ein Über- oder Unterschreiten der Versorgungsspannung und/oder eine erhöhte Stromaufnahme des Gleichstrommotors 26 erkannt, so erfolgt unmittelbar oder nach einer vorgebbaren Zeitspanne die Abschaltung des Gleichstrommotors 26. Alternativ kann bei einer aktiven Übertemperaturwarnung auch die Drehgeschwindigkeit des Gleichstrommotors 26 verlangsamt werden, um einer weiteren Erwärmung des Verstellantriebs 10 entgegenzuwirken. Tritt ein Fehler in der Leistungselektronik 30 auf (zum Beispiel durch einen Defekt eines oder mehrerer Transistoren 78, 80), so erkennt die Software-Logik diesen Fehler. Der Gleichstromotor 26 wird daraufhin deaktiviert, und die Steuerelektronik 28 meldet die Leistungselektronik 30 dem Master als defekt.

Bezüglich der Autoadressierung übernimmt die Software die Aufgabe, den gemessenen Spannungsabfall auszuwerten und die entsprechenden Autoadressierungsschritte, wie das Ein- oder Ausschalten der in dem ASIC 60 integrierten Stromquellen und Pull-Up-Widerstände (nicht gezeigt) sowie das Programmieren des Speichers 66, zu steuern.

Bei der Kalibrierlauf-Vorgabe durch den Master wird die Blockadeerkennung zur Determinierung der Endanschläge verwendet. Diese werden dem Master gemeldet (in Zählschritten des Drehwinkelsensors 36). Ein implementierter PI-Geschwindigkeitsregler stellt einen sanften Anlauf des Gleichstrommotors 26 zur Geräusch- und Anlaufstromreduktion sicher. Auf verschiedene Lasten und eine sich verändernde Versorgungsspannung reagiert der PI-Geschwindigkeitsregler mit einer Anpassung des Duty-Cycles der PWM, um eine konstante Drehzahl des Gleichstrommotors 26 zu gewährleisten. Nähert sich der Verstellantrieb 10 seiner Sollposition, so wird die Drehgeschwindigkeit des Gleichstrommotors 26 über eine Reduzierung des PWM-Duty-Cyles verringert, damit der Gleichstrommotor 26 sanft ausläuft. Dies verringert das Geräusch und verbessert das exakte Erreichen der Zielposition. Entsprechend kann auch eine sanfte Drehrichtungsumkehr, beispielsweise zur möglichst leisen und schonenden Anpassung der Lüftungsklappe 14 an veränderte äußere Klimabedingungen, realisiert werden. Weiterhin ist es möglich, den Gleichstrommotor 26 ohne Nachteile hinsichtlich des Abtriebmoments extrem langsam fahren zu lassen (Schleichfahrt).

Durch die Verwendung eines als 6-Volt-Gleichstrommotor 84 ausgebildeten Gleichstrommotors 26 in einem 12-Volt-Bordnetz ist es möglich, trotz einer schwankenden Versorgungsspannung stets das Nenndrehmoment zur Verfügung zu haben. Darüber hinaus kann bei Bedarf der 6-Volt-Gleichstrommotor 84 kurzfristig mit einem höheren Drehmoment betrieben werden, um eine eventuelle Blockade oder Schwergängigkeit zu überwinden. Alternativ oder ergänzend kann die Blockade oder Schwergängigkeit auch durch ein Zurückdrehen des Gleichstrommotors 26 und anschließender Ansteuerung mit dem maximalen Motorstrom überwunden werden. Diese Vorgehensweise ist jedoch bei einer Vermessungsfahrt oder, wenn sich die Luftverteilerklappe 14 im Anschlag befindet, zu vermeiden.

In der Regel erfolgt die Ansteuerung des Gleichstrommotors 26 zur Vermeidung eines hörbaren Taktens über die Leistungselektronik 30 mit einer PWM-Frequenz von ca. 20 kHz. Wird jedoch ein erhöhtes Drehmoment gefordert - beispielsweise bei einem Ausfahren der Luftverteilerklappe 14 aus dem Anschlag heraus bei tiefen Umgebungstemperaturen - , kann der Gleichstrommotor 26 zur besseren Überwindung der Haftreibmomente zusätzlich tieffrequent mit einer Frequenz von 5 bis 25 Hz, die der eigentlichen PWM-Frequenz überlagert ist, getaktet werden.

Mittels des in der Steuerelektronik 28 integrierten Microcontrollers 70 kann der maximale Motorstrom des Gleichstrommotors 26 an unterschiedliche Umgebungsbedingungen angepasst werden. Auf diese Weise ist es möglich, den maximalen Motorstrom bei einer steigenden Umgebungstemperatur zu verringern, um eine Überhitzung des Verstellantriebs 10 zu vermeiden.

Zum Spielausgleich des Verstellantriebs 10 ist vorgesehen, dass die Steuerelektronik 28 ein Anfahren der Zielposition der Luftverteilerklappe 14 stets aus der gleichen Richtung bewirkt. Weiterhin ist eine Logik in dem Microcontroller 70 enthalten, die ein Erkennen einer nicht beabsichtigten Positionsveränderung der Luftverteilerklappe 14 ermöglicht.

In Figur 3 ist ein erstes Ausführungsbeispiel des Gehäuses 44 des Verstellantriebs 10 in einem zusammengesetzten Zustand gezeigt. Es weist die für einen Verstellantrieb 10 sehr kompakten Ausmaße von ca. 55 mm in der Breite, ca. 90 mm in der Länge und ca. 25 mm in der Höhe auf. Das Gehäuse 44 ist als Kunststoffgehäuse 46 ausgebildet und besteht aus einer Unterschale 88 und einer Oberschale bzw. einem Deckel 90, wobei die Oberschale bzw. der Deckel 90 Rasthaken 92 zur Verrastung mit entsprechenden Rastaufnahmen 94 der Unterschale 88 aufweist. Alternativ können die Oberschale bzw. der Deckel 90 und die Unterschale 88 aber auch verschraubt, verklebt oder verschweißt (beispielsweise mittels Laserschweißen) sein. Das Gehäuse 86, insbesondere die Oberschale bzw. der Deckel 90, weist eine Ausnehmung 96 für eine drehbare, mit dem Abtriebselement 40 (nicht in Figur 3 zu erkennen) in einer Wirkverbindung stehende Aufnahme 98 auf, die ihrerseits eine Öffnung 100 besitzt mit an ihrem Öffnungumfang ausgebildeten Ausformungen 102 zur Übertragung des durch das Abtriebselement 40 erzeugten Drehmoments auf die nicht gezeigte Antriebsachse der Luftverteilerklappe 14. Die Kontur der Ausformungen 102 kann dabei beliebig sein. Im einfachsten Fall ist sie ein rechteckiger Schlitz. Ebenso sind aber auch symmetrische oder unsymmetrische ovale, drei- oder - wie in Figur 3 gezeigt - mehreckige Formen denkbar. In vorteilhafter Weise wird die Aufnahme 98 an ihrem äußeren Umfang 104 durch die Ausnehmung 96 der Oberschale bzw. des Deckels 90 geführt, wobei zwischen Aufnahme 98 und Ausnehmung 96 ein Luftspalt für eine möglichst reibungsarme Drehbewegung verbleibt.

In einer alternativen Ausgestaltung kann die Öffnung 100 der Aufnahme 98 auch durchgehend zylinderförmig mit den Ausformungen 102 ausgebildet sein, so dass sowohl die Oberschale bzw. der Deckel 90 als auch die Unterschale 88 des Gehäuses 86 eine entsprechende Ausnehmung 96 zur Führung der Aufnahme 98 aufweisen. Dies bietet den Vorteil, dass der Verstellantrieb 10 in beliebigem Abstand auf die Antriebsachse der Luftverteilerklappe 14 aufsteckbar ist. Weiterhin kann auf diese Weise ein Verkanten des Verstellantriebs 10 auf der Antriebsachse weitgehend vermieden werden.

Zur Verbindung des Verstellantriebs 10 mit dem LIN-Bus-System 24 und der Versorgungsspannung sowie der elektrischen Masse GND besitzt die Unterschale 88 ein Gehäuseteil 106, das als Stecker oder Buchse ausgebildet ist und Kontakte 108 (siehe Figur 4b) für den Energieversorgungsanschluss 18, 20 und die Datenschnittstelle 22 aufweist. Zur Vermeidung einer Verpolung sind in dem Gehäuseteil 106 Führungselemente 110 vorgesehen. Diese können gleichzeitig als Rastelemente für den eingesteckten Stecker oder die eingesteckte Buchse dienen, um ein ungewolltes Herauslösen zu vermeiden.

Um den Verstellantrieb mit einem Karosserieteil des Kraftfahrzeugs zu verbinden, sind in der Oberschale bzw. dem Deckel 90 und in der Unterschale 88 des Gehäuses 86 entsprechende Befestigungsöffnungen 112 als Befestigungspunkte vorgesehen. Mittels dieser kann der Verstellantrieb 10 entweder an dem Karosserieteil festgeschraubt oder aufgesteckt werden. Um die Laufruhe des Antriebs zu verbessern, ist durch die räumliche Gestaltung und Materialauswahl eine Optimierung der Dämpfungseigenschaften des Kunststoffgehäuses 46 sowie dessen Befestigungspunkte möglich.

Figur 4a zeigt ein weiteres Ausführungsbeispiel des Gehäuses 44 des Verstellantriebs 10 in einer Schrägdarstellung mit abgehobener Oberschale bzw. abgehobenem Deckel 90. Wiederum sind die Rasthaken 92 der Oberschale bzw. des Deckels 90 und die Rastaufnahmen 94 der Unterschale 88 sowie die Befestigungsöffnungen 112, die hier jedoch nur in der Oberschale bzw. dem Deckel 90 vorgesehen sind, zu erkennen. Die Unterschale 88 besitzt Aufnahmen für das Abtriebselement 40, den Gleichstrommotor 26, 84 und die Leiterplatte 62, die ihrerseits gemäß Figur 4b mit der Steuerelektronik 28 und der Leistungselektronik 30 in Gestalt des ASICs 60, des ESD-Schutzes 50, des EMC-Filters 52, des Energiepuffers 54 und des als Hall-Sensor 38 ausgebildeten Drehwinkelsensors 36 bestückt ist. Weiterhin weist die Leiterplatte 62 die bereits erwähnten Kontakte 108 auf, die derart geformt sind, dass sie bei entsprechender Einpassung der Leiterplatte 62 in die Unterschale 88 in den als Buchse oder Stecker dienenden Gehäuseteil 106 der Unterschale 88 hineinragen und somit als elektrischer Kontaktteil der Buchse bzw. des Steckers fungieren. Auch hier wird die Verpolung eines eingesteckten Steckers bzw. einer eingesteckten Buchse durch entsprechende Führungselemente 110 vermieden, die gleichzeitig als Rastelemente für den Stecker bzw. die Buchse dienen können.

Das Abtriebselement 40 ist in Figur 4a als Untersetzungsgetreibe 42 ausgebildet. Es wird über eine auf der Motorachse 32 drehfest montierte Schnecke 114 angetrieben und steht in einer Wirkverbindung mit der nach unten gerichteten Aufnahme 98 (in Figur 4a nicht zu erkennen), deren Führung nun durch eine Ausnehmung in der Unterschale 88 erfolgt. Alternativ kann natürlich auch in diesem Ausführungsbeispiel eine durch das gesamte Gehäuse 86 durchgehende Öffnung der Aufnahme 98 zum Einsatz kommen. In diesem Fall müsste jedoch zumindest eines der zu erkennenden Zahnräder 116 entsprechend ausgebildet und geführt sein, so dass die Antriebsachse des Luftklappenstellers 14 durch dessen Drehpunkt und durch die entsprechenden Ausnehmungen der Unterschale 88 und der Oberschale bzw. des Deckels 90 hindurchragen kann. Um eventuell eingesetzte Schmierstoffe im Bereich der Zahnradeingriffe zu halten, weist das Kunststoffgehäuse Wandungen 115 auf, die sich in axialer Richtung der Zahnräder 116 erstrecken und diese in einem definierten, radialen Abstand von maximal 1,2 mm über einen größtmöglichen Winkelbereich umgeben.

Die auf der Motorachse 32 drehfest montierte Schnecke 114 kann entweder aus Kunststoff, aus Metall, oder aus einem kunststoffgebundenen Magnetmaterial gefertigt sein. Im letzteren Fall ist es möglich, die Schnecke 114 nicht nur als Antriebselement für ein Metall-Schneckenrad 117 des Untersetzungsgetriebes 42 sondern auch als segmentierten Magnetring 34 für die Drehwinkelerfassung mittels des Drehwinkelsensors 36 zu verwenden. Dabei erfolgt die Segmentierung des kunststoffgebundenen Magnetmaterials zumindest über einen definierten achsialen Bereich, der von einem Abtastfeld des Drehwinkelsensors 36 abgedeckct wird. Besteht die Schnecke 114 zudem in dem Bereich, mit dem sie das Metall-Schneckenrad 116 berührt, aus dem kunststoffgebundenen Magnetmaterial (alternativ kann die Schnecke 114 natürlich auch vollständig aus dem kunststoffgebundenen Magnetmaterial bestehen), so kann sie sich mit der resultierenden magnetischen Kraft zum Zwecke der Selbsjustierung im Metall-Schneckenrad 117 halten. Auf eine aufwändige Lagerung der Motorachse 32 in der Unterschale 88 kann somit verzichtet werden.

Es sei abschließend noch darauf hingewiesen, dass die gezeigten Ausführungsbeispiele weder auf die Figuren 1 bis 4 noch auf die genannten Ausmaße oder Formen des Gehäuses 44 beschränkt sind. Weiterhin kann der erfindungsgemäße Verstellantrieb 10 auch in Verbindung mit anderen Bus-Systemen als dem LIN-Bus eingesetzt werden. Die in der H-Brücke 74 eingesetzten Transistoren 78, 80 sind selbstverständlich nicht auf PMOS- oder NMOS-Typen beschränkt. Statt dessen können auch herkömmliche Bipolartransistoren, IGBTs oder FET zum Einsatz kommen. Ebenso kann je nach Anforderung an den Gleichstommotor 26 statt einer H-Brücke auch eine B-Schaltung als Leistungselektronik 30 eingesetzt werden. Zwar ist der Verstellantrieb 10 in besonders vorteilhafter Weise als ein Luftklappensteller einsetzbar, allerdings sollen die Ausführungsbeispiele nicht als eine Enschränkung bezüglich seiner Anwendung auf diesem Einsatzgebiet verstanden werden.

## Patentansprüche

1. Verstellantrieb (10) zum Verstellen eines beweglichen Teils (12) in einem Kraftfahrzeug, mindestens umfassend
• ein Abtriebselement (40) zur Verstellung des beweglichen Teils (12),
• einen Gleichstrommotor (26) zum Antreiben des Abtriebelements (40) über eine Motorwelle (32),
• eine Steuerelektronik (28) zur Ansteuerung des Gleichstrommotors (26),
• einen mit der Steuerelektronik (28) elektrisch verbundenen Drehwinkelsensor (36) zur Erfassung von Drehwinkeln der Motorwelle (32),
• eine Datenschnittstelle (22) zum Empfangen zumindest eines Drehwinkelsollwertes, einer Solldrehgeschwindigkeit und/oder einer gewünschten Drehrichtung sowie zum Senden eines Antriebzustands,
• einen Energieversorgungsanschluss (18, 20) zur Versorgung des Verstellantriebes (10) mit Energie und
• ein den Verstellantrieb (10) umgebendes Gehäuse (44).

2. Verstellantrieb (10) nach Anspruch 1, **dadurch gekennzeichnet, dass** die Steuerelektronik (28) den Gleichstrommotor (26) über eine Leistungselektronik (30) mit einem pulsweitenmodulierten Signal ansteuert.

3. Verstellantreib (10) nach einem der vorhergehenden Ansprüche, **dadurch gekennzeichnet, dass** die Steuerelektronik (28) die Drehzahl des Gleichstrommotors (26) in Abhängigkeit vom Abstand zu der jeweiligen Zielposition des beweglichen Teils (12) steuert bzw. regelt.

4. Verstellantrieb (10) nach einem der vorhergehenden Ansprüche, **dadurch gekennzeichnet, dass** die Steuerelektronik (28) die Leistungselektronik (30) zusätzlich tieffrequent mit einer Frequenz zwischen ca. 5 Hz und ca. 25 Hz ansteuert.

5. Verstellantrieb (10) nach einem der vorhergehenden Ansprüche, **dadurch gekennzeichnet, dass** die Steuerelektronik (28) einen maximalen Motorstrom des Gleichstrommotors (26) an Umgebungsbedingungen, beispielsweise durch Verringerung des maximalen Motorstroms bei steigender Umgebungstemperatur, anpasst.

6. Verstellantrieb (10) nach einem der vorhergehenden Ansprüche, **dadurch gekennzeichnet, dass** die Steuerelektronik (28) bei einer Blockierung des Gleichstrommotors (26) und/oder des beweglichen Teils (12) ein Zurückdrehen des Gleichstrommotors (26) bewirkt.

7. Verstellantrieb (10) nach einem der vorhergehenden Ansprüche, **dadurch gekennzeichnet, dass** die Steuerelektronik (28) ein Anfahren der Zielposition des beweglichen Teils (12) stets aus der gleichen Richtung bewirkt.

8. Verstellantrieb (10) nach einem der vorhergehenden Ansprüche, **dadurch gekennzeichnet, dass** die Steuerelektronik (28) eine Logik zum Erkennen einer nicht beabsichtigten Positionsveränderung des beweglichen Teils (12) aufweist.

9. Verstellantrieb (10) nach Anspruch 8, **dadurch gekennzeichnet, dass** die Steuerelektronik (28) bei Erkennen einer nicht beabsichtigten Positionsveränderung des beweglichen Teils (12) einen Kalibrierlauf des Gleichstrommotors (26) durchführt.

10. Verstellantrieb (10) nach Anspruch 1, **dadurch gekennzeichnet, dass** der Drehwinkelsensor (36) ein ortsfester Hallsensor (38) ist, der die Drehwinkel mittels eines auf der Motorwelle (32) drehfest angeordneten, segmentierten Magnetrings (34, 114) berührungslos erfasst.

11. Verstellantrieb (10) nach Anspruch 1, **dadurch gekennzeichnet, dass** die Steuerelektronik (28) auf einer Leiterplatte (62) angeordnet ist und zumindest aus einem ASIC (60), einem Filter gegen elektromagnetische Störungen (52), einem Energie-Puffer (54), einer Schutzvorrichtung gegen elektrostatische Entladung (50) und dem Drehwinkelsensor (38) besteht.

12. Verstellantrieb (10) nach Anspruch 11, **dadurch gekennzeichnet, dass** das Filter gegen elektromagnetische Störungen (52) zumindest einen Längswiderstand (56) und einen Kondensator (58) aufweist.

13. Verstellantrieb (10) nach Anspruch 11, **dadurch gekennzeichnet, dass** der ASIC (60) zumindest die Datenschnittstelle (22), die Leistungselektronik (30), einen Spannungsregler (64), einen Speicher (66), einen A/D-Umsetzer (68), einen Microcontroller (70) und eine den Microcontroller (70) überwachende Überwachungseinrichtung (72) umfasst.

14. Verstellantrieb (10) nach Anspruch 11 oder 13, **dadurch gekennzeichnet, dass** die Leiterplatte (62) elektrische Kontakte (108) aufweist für die Datenschnittstelle (22) und den Energieversorgungsanschluss (18, 20).

15. Verstellantrieb (10) nach Anspruch 1, 13 oder 14, **dadurch gekennzeichnet, dass** die Datenschnittstelle (22) ein LIN-Bus-Interface (74) ist.

16. Verstellantrieb (10) nach Anspruch 1, 13, 14 oder 15, **dadurch gekennzeichnet, dass** die Datenschnittstelle (22) eine automatische Adressierung des Verstellantriebs (10) durchführt.

17. Verstellantrieb (10) nach einem der vorhergehenden Ansprüche, **dadurch gekennzeichnet, dass** die Leistungselektronik (28) eine Vollbrückenschaltung (74) zur Ansteuerung des Gleichstrommotors (26) umfasst.

18. Verstellantrieb (10) nach einem der vorhergehenden Ansprüche, **dadurch gekennzeichnet, dass** der Gleichstrommotor (26) ein 6-Volt-Gleichstrommotor (84) ist.

19. Verstellantrieb (10) nach Anspruch 1, **dadurch gekennzeichnet, dass** das Gehäuse (86) eine Ausnehmung (96) aufweist für eine drehbare, mit dem Abtriebselement (40) in einer Wirkverbindung stehenden Aufnahme (98).

20. Verstellantrieb (10) nach Anspruch 19, **dadurch gekennzeichnet, dass** die Aufnahme (98) eine durchgehende Öffnung (100) aufweist mit an ihrem Öffnungsumfang ausgebildeten Ausformungen (102) zur Übertragung des durch das Abtriebselement (40) erzeugten Drehmoments.

21. Verstellantrieb (10) nach Anspruch 20, **dadurch gekennzeichnet, dass** ein äußerer Umfang (104) der Aufnahme (98) durch die Ausnehmung (96) geführt ist.

22. Verstellantrieb (10) nach einem der vorhergehenden Ansprüche 1, 18 oder 20, **dadurch gekennzeichnet, dass** das Gehäuse (44) ein Kunststoffgehäuse (46) ist, das aus einer Unterschale (88) und einer Oberschale bzw. einem Deckel (90) besteht, wobei die Oberschale bzw. der Deckel (90) und die Unterschale (88) miteinander verrastet, verschraubt, verklebt oder verschweißt sind.

23. Verstellantrieb (10) nach Anspruch 22, **dadurch gekennzeichnet, dass** das Abtriebselement (40) aus einem oder mehreren Zahnrädern (116) besteht, wobei das Kunststoffgehäuse (46) Wandungen (115) aufweist, die sich in axialer Richtung der Zahnräder (116) erstrecken und diese in einem definierten, radialen Abstand über einen größtmöglichen Winkelbereich umgeben.

24. Verstellantrieb (10) nach Anspruch 22, **dadurch gekennzeichnet, dass** das Kunststoffgehäause (46) derart ausgestaltet ist, dass unter Berücksichtigung der Materialeigenschaften die Elastizitäts- und Dämpfungseigenschaften der Gehäuseteile (88, 90) sowie deren Befestigungspunkte, die Körperschallübertragungen und die Körperschallabstrahlungen minimal sind.

25. Verstellantrieb (10) nach einem der vorhergehenden Ansprüche, **dadurch gekennzeichnet, dass** das Abtriebselement (40) ein mechanisches Getriebe, insbesondere ein Untersetzungsgetriebe (42), ist.

26. Verstellantrieb (10) nach einem der vorhergehenden Ansprüche, **dadurch gekennzeichnet, dass** die Unterschale (88) Aufnahmen für das Abtriebselement (40), den Gleichstrommotor (26) und die Leiterplatte (62) aufweist, wobei ein Gehäuseteil (106) der Unterschale (88) als Stecker oder Buchse mit den elektrischen Kontakten (108) der Leiterplatte (62) ausgebildet ist.

27. Verstellantrieb (10) nach einem der vorhergehenden Ansprüche, **dadurch gekennzeichnet, dass** das Abtriebselement (40) ein Metall-Schneckenrad (117) aufweist und mit einer auf der Motorachse (32) montierten Schnecke (114) in einer Wirkverbindung steht, wobei die Schnecke (114) aus einem kunststoffgebundenen Magnetmaterial besteht, das aufgrund der resultierenden magnetischen Kraft zwischen der Schnecke (114) und dem Metall-Schneckenrad (117) eine Selbstjustierung bewirkt.

28. Verstellantrieb (10) nach Anspruch 27, **dadurch gekennzeichnet, dass** die aus dem kunststoffgebundenen Magnetmaterial bestehende Schnecke (114) zumindest über einen definierten achsialen Bereich derart magnetisiert ist, dass sie als segmentierter Magnetgeber für den Drehwinkelsensor (36) dient.

29. Verstellantrieb (10) nach einem der vorhergehenden Ansprüche, **dadurch gekennzeichnet, dass** das bewegliche Teil (12) eine Luftverteilerklappe (14) ist.

30. Luftklappensteller mit einem Verstellantrieb (10) nach einem der vorhergehenden Ansprüche.
